# EUROPÄISCHE PATENTSCHRIFT

(11) **EP 2 050 595 B1**
(45) Veröffentlichungstag und Bekanntmachung des Hinweises auf die Patenterteilung: **21.08.2013**
(21) Anmeldenummer: 08165889.0
(22) Anmeldetag: 06.10.2008
(51) Int. Cl.: B60G 13/10, B60G 17/08, F16F 9/46

(54) **Verfahren zum Betrieb eines Luftfeder-Dämpfers**
Method for operating a pneumatic spring damper
Procédé destiné au fonctionnement d'un ressort- amortisseur pneumatique

(30) Priorität: 16.10.2007 DE 102007049445
(43) Veröffentlichungstag der Anmeldung: 22.04.2009
(73) Patentinhaber: ZF Friedrichshafen AG, 88038 Friedrichshafen (DE)
(72) Erfinder: Förster, Andreas, 97422 Schweinfurt (DE); Hees, Eberhard, 97505 Geldersheim (DE); Gilsdorf, Heinz-Joachim, 97499 Donnersdorf (DE); Sonnenburg, Reinhard, 97705 Burkhardroth (DE)

(56) Entgegenhaltungen:
- EP-A- 1 688 281
- DE-B3-102005 025 978
- US-A1- 2005 173 849

## Beschreibung

Die Erfindung betrifft ein Verfahren zum Betrieb eines Luftfeder-Dämpfers gemäß dem Oberbegriff von Patentanspruch 1.

Aus der DE10 2005 025 978 B3 ist Luftfeder-Dämpfer mit verstellbarer Dämpfkraft bekannt. Bei einem Luftfeder-Dämpfer besteht das generelle Problem, dass sich Dämpfkraft und Federkraft nicht trennen und messen und einstellen lassen. Nach außen ist nur eine resultierende Betriebskraft messbar. Die rechnerisch bestimmbare Dämpfkraft stellt sich als eine nichtlineare Funktion der Frequenz dar und zeigt ein ausgeprägtes Maximum. Dieses Maximum ist in seinem Wert für jeden speziellen Luftfeder-Dämpfer durch seine konstruktiven Merkmale bestimmt. Die Lage des Maximums hängt u. a. von einer Ventilöffnungsfläche des verstellbaren Dämpfventils ab. Auch die Federkraft des Luftfeder-Dämpfers ist frequenzabhängig und steigt von einem ausgesprochen niedrigen Niveau bei kleinen Frequenzen auf eine hohe Federkraft mit degressiver Steigung.

Des Weiteren werden die Dämpfkraft und die Federkraft von der Anregung des Luftfeder-Dämpfers bestimmt. Die Parameter Amplitude und Frequenz der Anregung auf den Luftfeder-Dämpfer sind sehr unterschiedlich und nicht beeinflussbar, hingegen werden die die Dämpfkraft und Federkraft bestimmenden Merkmale Druck und Verdrängerfläche im Luftfeder-Dämpfer eindeutig festgelegt. Die Ventilöffnungsfläche ist durch die Verwendung eines verstellbaren Dämpfventils ebenfalls variabel.

Die Ventilkennlinie ist bekannt im Gegensatz zu den Anregungen auf den Luftfeder-Dämpfer, die messtechnisch erfasst werden müssen. Um aus einer Anregung die Frequenz und die Amplitude ermitteln zu können, sind aufwendige Berechnungen notwendig, die sich nur schwer in Echtzeit realisieren lassen.

Die Aufgabe der vorliegenden Erfindung ist, es ein Verfahren bereitzustellen, mit dem mit geringem Aufwand eine optimale Dämpf-Federkraftsteuerung bei einem Luftfeder-Dämpfer möglich ist.

Erfindungsgemäß wird die Aufgabe dadurch gelöst,
- dass der Luftfeder-Dämpfer hinsichtlich Frequenzen und Amplituden bekannten Schwingungen ausgesetzt wird,
- dass durch die Verstellung des Ventils maximale Dämpfkräfte erzeugt werden, die zusammen mit mindestens einem die bekannten Schwingungen charakterisierenden Parameter in einer Kennfeldebene (29) abgelegt werden,
- dass die auf den Luftfeder-Dämpfer während es Betriebs tatsächlich auftretenden Schwingungen generell als harmonische Schwingungen gewertet werden,
- dass der durch eine Messung des charakterisierenden Parameters erfasste Wert der tatsächlich auftretenden Schwingung als Eingangsgröße für die Kennfeldebene genutzt und die Verstellung der Ventilöffnungsfläche Aᵣₑₛ des Ventils vorgenommen wird.

Der überraschende Effekt der Erfindung besteht darin, dass man auch ohne Kenntnis der exakten tatsächlichen Anregung, die momentan auf den Luftfeder-Dämpfer einwirkt, ein Verfahren nutzen kann, das bei einem Kraftfahrzeug zu einem sehr vorteilhaften Fahrverhalten führt. Die bei einem Luftfeder-Dämpfer u. U. auftretende Unterdämpfung aufgrund falscher Ventileinstellung ist damit ausgeschlossen.

Durch die Annahme, dass die tatsächliche Anregung des Luftfeder-Dämpfers eine harmonische Schwingung darstellt, ergibt sich eine wesentliche Vereinfachung des gesamten Einstellverfahrens der Ventilöffnungsfläche Aᵣₑₛ. Bei einer harmonischen Schwingung, die sich als eine Sinusschwingung darstellen lässt, kann man mit geringem Aufwand alle Schwingungsparameter ermitteln.

Als ein die Anregung bzw. Schwingung charakterisierende Parameter sind z. B. die Relativbeschleunigung und die Relativgeschwindigkeit der zueinander axial beweglichen Komponenten des Luftfeder-Dämpfers verwertbar.

Gemäß einem vorteilhaften Unteranspruch wird unterhalb einer definierten Amplitude als Eingangsgröße für die Kennfeldebene nur ein charakterisierende Parameter verwendet. Wenn man die Amplitude als Eingangsgröße in einem Anregungsbereich ausklammern kann, dann wird der Ablauf des Verfahrens nochmals beschleunigt.

Umfangreiche Untersuchungen haben gezeigt, dass sich dann die Kennfeldebene auf eine Kennlinie in Form eines Polynoms 2. Grades reduziert lässt. Mit vergleichsweise einfachen Mitteln kann dann jedem Punkt, d. h. jedem Betrag des charakterisierenden Parameters der Schwingung sehr einfach eine Ventilöffnungsfläche als Ausgangsgröße zugeordnet werden.

Eine für die Schwingungsdämpfung akzeptable Güte wird erreicht, wenn die Grenze der Amplitude bei max. 30 mm liegt. Dabei muss man berücksichtigen, dass die 30 mm bei einer Radfederungsbewegung nicht auf eine Bodenwelle, sondern auf ein Rechteckhindernis zu beziehen sind, die in der Praxis bei einer durchschnittlichen Fahrbahn nur sehr selten auftreten, so dass man in einem weiten Betriebsbereich des Luftfeder-Dämpfers ein einzig von einem charakterisierenden Parameter abhängige Verstellung der Ventiöffnungsfläche vornehmen kann.

In weiterer vorteilhafter Ausgestaltung des Verfahrens besteht die Möglichkeit, dass zu dem Luftfeder-Dämpfer eine Federkraftkennlinie bestimmt wird, die mit der die Dämpfkräfte repräsentierende Kennfeldebene über die die Schwingungen charakterisierenden Parameter kombiniert wird, um einen Federkraftwert zu bestimmen, der durch eine Anpassung der Ventilöffnungsfläche Aᵣₑₛ in Abhängigkeit einer momentanen Zustandsgröße variabel ist.

Die Ventilöffnungsfläche wird dann aufgrund einer überlagerten Betrachtung aus gewünschter Federkraft und Dämpfkraft eingestellt.

Als Zustandsgröße wird ein Bewegungsparameter eines von dem Luftfeder-Dämpfer getragenen Bauteils verwendet. Der Bewegungsparameter kann z. B. von einem Beschleunigungssignal gebildet werden, dass ein plötzliches Bremsmanöver oder eine ruckartige Querbeschleunigungsänderung bei einem Fahrzeug anzeigt. In einer derartigen Fahrsituation kann es durchaus vorteilhaft sein, für einen bestimmten Zeitrahmen die Dämpfkräfte zugunsten höherer Federkräfte zu reduzieren, um z. B. einen Fahrzeugaufbau zu stabilisieren.

Anhand der folgenden Figurenbeschreibung soll die Erfindung näher erläutert werden.

Es zeigt:
- Fig. 1: Luftfeder-Dämpfer mit Sensorik
- Fig. 2: Kennfeldebene für Steuerung/Regelung des Luftfeder-Dämpfers
- Fig. 3: Kennlinie aus Kennfeldebene nach Fig. 2
- Fig. 4: Dämpfkraftkennlinie eines Luftfeder-Dämpfers
- Fig. 5: Federkraftkennlinie eines Luftfeder-Dämpfers

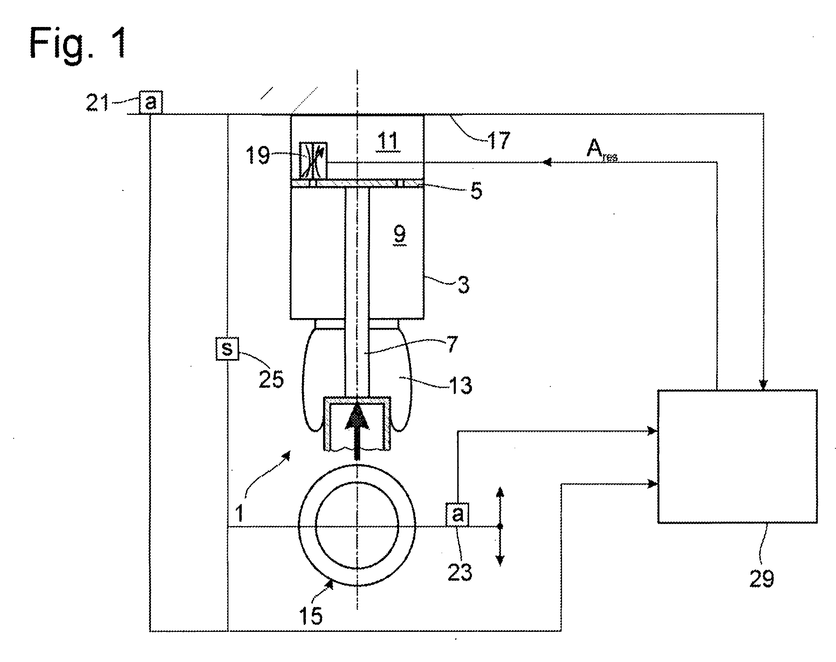

Die Figur 1 zeigt den minimalen Systemaufwand für das Verfahren. Ein Luftfeder-Dämpfer 1 verfügt über einen Zylinder 3, in dem ein Kolben 5 an einer Kolbenstange 7 zwei mit einem gasförmigen Dämpfmedium gefüllte Räume 9; 11 trennt. Dem unteren Arbeitsraum 9 schließt sich ein Federraum 13 an. Die Kolbenstange 7 ist zumindest mittelbar mit einem Fahrzeugrad 15 und der Zylinder 3 mit einem Fahrzeugaufbau 17 verbunden. Selbstverständlich kann der Luftfeder-Dämpfer 1 auch bei anderen Anwendungen, z. B. einer Fahrerhauskabine auf einem Fahrzeugrahmen verwendet werden.

Der Kolben 5 im Zylinder 3 ist mit einem verstellbaren Ventil 19 ausgeführt, das einen Dämpfmediumaustausch zwischen den beiden Arbeitsräumen 9, 11 beeinflusst. Generell kann die Erfindung auch bei einem Luftfeder-Dämpfer mit einer deutlich abweichenden Bauweise angewendet werden. Unabhängig von der Einstellung des Ventils 19 wird das Betriebsverhalten, d. h. das Erzeugen von Dämpf- und Federungskräften konstruktionsbedingt von der Größe des Kolbens 5, von der Größe der Arbeitsräume 9; 11 und dem Druck des gasförmigen und damit kompressiblen Dämpfmediums bestimmt. Eine Unterscheidung oder gar eine funktionale Trennung zwischen Feder- und Dämpfkräften ist bei einem Luftfeder-Dämpfer 1 nicht möglich.

Die Relativbewegung zwischen Fahrrzeugaufbau 17 und Rad 15, die synchron von dem Luftfeder-Dämpfer 1 mit ausgeführt wird, wird von mindestens zwei Sensoren 21; 23 in Form von Beschleunigungssignalen erfasst. Alternativ kann auch ein Wegsensor 25 verwendet werden und durch einfache Differentiation des Signals einen charakterisierenden Parameter wie relative Geschwindigkeit zwischen dem Rad 15 und dem Fahrzeugaufbau 17 am Luftfeder-Dämpfer 1 erfassen zu können. Das Beschleunigungssignal und/oder das Wegsignal, das die Amplitude einer auf das Rad 15 einwirkenden Anregung repräsentiert, werden an eine Rechnereinheit 29 geleitet, die als Ausgangsgröße einen Wert Aᵣₑₛ an das verstellbare Ventil 19 leitet, wobei der Wert Aᵣₑₛ für eine vom Ventil 19 bestimmten Ventilöffnungsfläche steht.

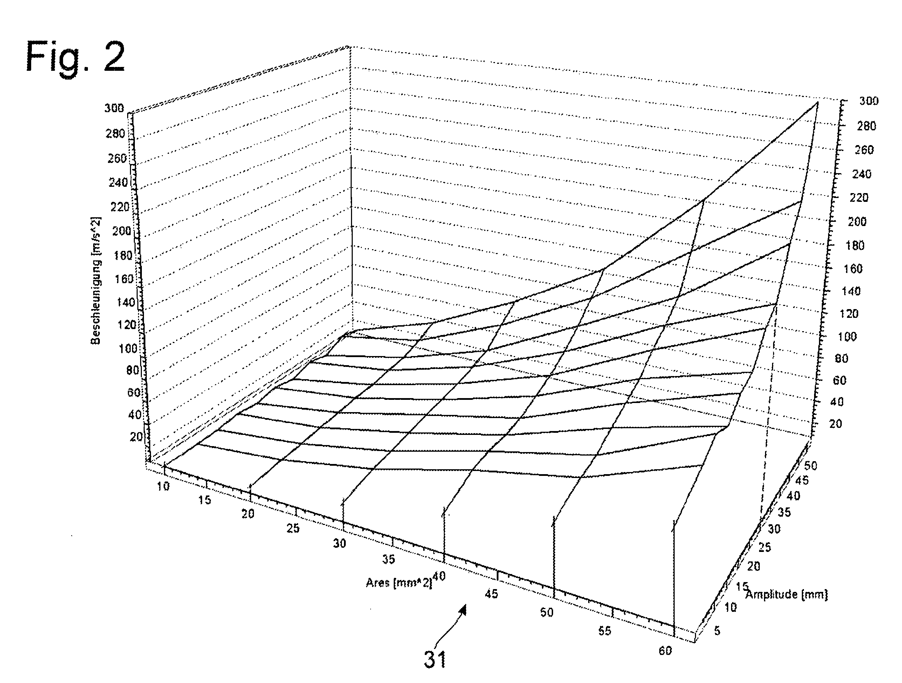

Für die Durchführung des Verfahrens zum Betrieb des Luftfeder-Dämpfers wird dessen Betriebsverhalten erfasst. In einer Versuchsanordnung oder mittels eines Simulationsprogramms wird der Luftfeder-Dämpfer 1 einer Vielzahl von definierten Anregungen ausgesetzt, deren Frequenz und Amplitude bekannt sind. Im Betriebspunkt wird die Einstellung des Ventils 19 mit dem Ziel der größten Dämpfkraft variiert. Dabei werden Werte-Gruppen ermittelt, die als Eingangsgrößen einen charakterisierenden Parameter, relative Beschleunigung oder Relartivgeschwindigkeit, und die Amplitude der Anregung mit der Ausgangsgröße Aᵣₑₛ kombiniert. Aus einer Vielzahl von Werte-Gruppen lässt sich eine Kennfeldebene 31 nach Fig. 2 aufbauen. Diese Kennfeldebene 31 ist in der Rechnereinheit 29 abgelegt.

Bei einer Anregung auf den Luftfeder-Dämpfer 1 während der Fahrt wird von den Sensoren 21; 23 die momentane Relativbeschleunigung zwischen Rad und Fahrzeugaufbau erfasst. Es wird vereinfachend davon ausgegangen, dass es sich bei den tatsächlichen Anregungen um eine harmonische Schwingungen handelt. Aus der Messung des charakterisierenden Parameters Relativbeschleunigung oder Relativgeschwindigkeit und der Amplitude am Luftfeder-Dämpfer 1 und dem Rückschluss über die Kennfeldebene 31 wird die Verstellung des Ventils 21 mit der Vorgabe Aᵣₑₛ vorgenommen.

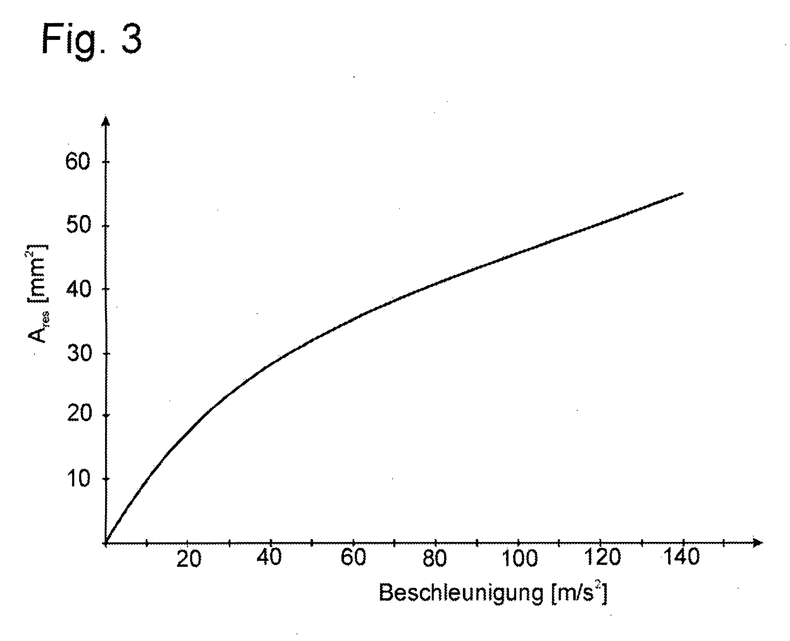

Unterhalb einer definierten Amplitude der Anregung wird als Eingangsgröße für die Bestimmung der Ausgangsgröße Aᵣₑₛ nur der charakterisierende Parameter Relativbeschleungigung oder Relativgeschwindigkeit verwendet. Eine praktikable Grenze der Amplitude liegt bei max. 30 mm. Bis zu diesem Amplitudenwert wird die Kennfeldebene auf eine Kennlinie in Form eines Polynoms 2. Ordnung reduziert, Die auftretende Abweichung zur Kennfeldebene führt zwar zu einem Einstellungsfehler beim verstellbaren Ventil 19, doch der mit dieser Maßnahme erreichte Gewinn bei der Verfahrensgeschwindigkeit gleicht dieses Defizit wieder aus. Eine entsprechende Kennlinie ist in der Fig. 3 dargestellt.

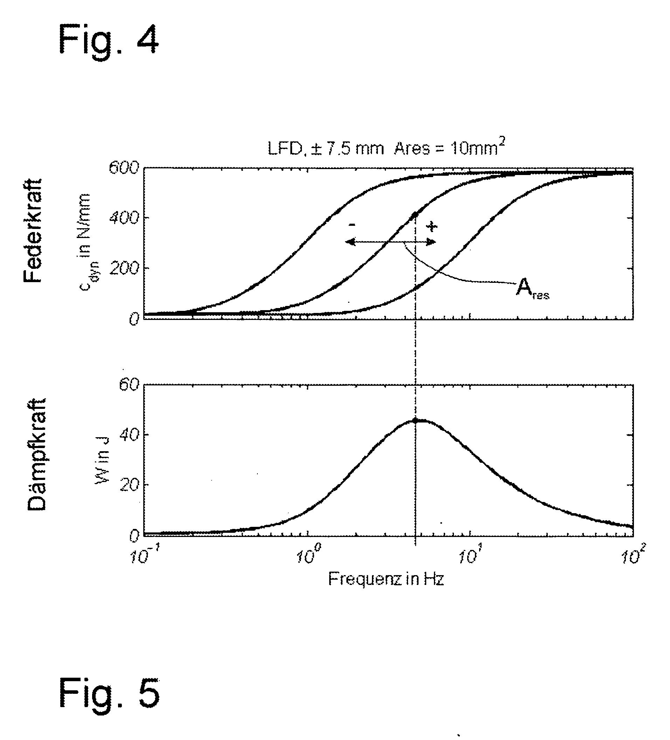

Die Figuren 4 und 5 zeigen eine Federkraftkennlinie und eine Dämpfkraftkennlinie eines Luftfeder-Dämpfers 1 bei einer bekannten vorgegebenen Anregung und Ventileinstellung Aᵣₑₛ. Bei der Federkraftkennlinie nach Fig. 4 handelt es sich um eine eineindeutige Funktion, d. h. ein bestimmter Federkraftwert lässt sich nur einer einzigen Anregung zuordnen. Hingegen handelt es sich bei der Dämpfkraftkennlinie nach Fig. 5 nur um eine eindeutige Funktion, deren Dämpfkraftwerte durchaus auf zwei deutlich unterschiedliche Anregungen basieren können.

Das Dämpfkraftkennfeld nach Fig. 2 enthält eine Sammlung von Maximaldämpfkraftwerten aus der Fig. 5, die jeweils einer Anregung zuzuorden sind. Wie man aus der Fig. 4 entnehmen kann, liegt bei einem Maximaldämpfkraftwert nach Fig. 5 kein Maximalfederkraftwert vor, sondern man befindet sich in einem ansteigend verlaufenden Kennlinienbereich. Bei bestimmten Situationen, z. B. einem plötzlichen Brems- oder Ausweichmanöver treten sprunghaft sich ändernde Beschleunigungen am Fahrzeugaufbau als das vom Luftfeder-Dämpfer 1 getragenes Bauteil auf. Für diese kritischen Fahrmanöver benötigt man nicht die maximale Dämpfkraft, sondern größere Federkräfte, die den Fahrzeugaufbau stabilisieren.

Diese Beschleunigung dient als Zustandsgröße für einen weiteren Verfahrensschritt. Durch die überlagerte Nutzung des Kennfelds 31 nach der Fig. 2 und der Kennlinie nach Fig. 4 kann man eine resultierende Betriebskraft bestehend aus Federkraft und Dämpfkraft gezielt zusammenstellen, wobei beide Kräfte unterschiedlich auf das Fahrverhalten wirken. Dabei geht es nicht unbedingt um die maximal erzielbare Betriebskraft, sondern um ein optimales "Mischungsverhältnis" aus Federkraft, nützlich zur Aufbauabstützung, und Dämpfkraft, verantwortlich für Fahrbahnkontakt des Rades und Fahrkomfort im Fahrzeug. Durch die Verwendung des Kennfelds 31 nach Fig. 2 ist für ein Steuerungs/Regelungssystem der Nutzungsbereich der Dämpfkraftkennlinie nach Fig. 5 definiert. Aus der Anregung und Ventileinstellung Aᵣₑₛ ergibt sich eine Federkraft. Mit der Reduzierung von Aᵣₑₛ stellt sich zwangsläufig eine Steigerung der Federkraft und eine Verminderung der Dämpfkraft ein. Praktisch wird bei einer Reduzierung von Aᵣₑₛ die Federkraftkennlinie nach links verschoben, so dass bei einer niederfrequenteren Anregung schon eine größere Federkraft zur Verfügung steht. Durch die Kombination der beiden Figuren 4 und 5, d. h. die Kenntnis, in der Federkraftkennlinie bewegt sich das System gemäß dem Verfahren im ansteigenden Kennlinienbereich und in der Dämpkraftkennlinie im Maximalbereich unter Berücksichtigung, dass man bei reduzierter Ventilöffnungsfläche Aᵣₑₛ die Federkraft steigert, kann man auch in der Dämpfkraftkennlinie navigieren und stets erkennen, in welchem Kennlinienbereich links oder rechts des Dämpfkraftmaximus wird momentan gesteuert/ regelt.

## Patentansprüche

1. Verfahren zum Betrieb eines Luftfeder-Dämpfers (1), umfassend mindestens zwei mit einem gasförmigen Dämpfmedium gefüllte Arbeitsräume (9; 11), die über mindestens einen Strömungskanal in Verbindung stehen, wobei der Strömungskanal mittels eines verstellbaren Ventils (19) mit einer Ventilöffnungsfläche Ares in seinem wirksamen Querschnitt einstellbar ist,
**dadurch gekennzeichnet,**
- **dass** der Luftfeder-Dämpfer (1) hinsichtlich Frequenzen und Amplituden bekannten Schwingungen ausgesetzt wird,
- **dass** durch die Verstellung des Ventils (19) maximale Dämpfkräfte erzeugt werden, die zusammen mit mindestens einem die bekannten Schwingungen charakterisierenden Parameter in einer Kennfeldebene (31) abgelegt werden,
- **dass** die auf den Luftfeder-Dämpfer (1) während es Betriebs tatsächlich auftretenden Schwingungen generell als harmonische Schwingungen gewertet werden,
- **dass** der durch eine Messung des charakterisierenden Parameters erfasste Wert der tatsächlich auftretenden Schwingung als Eingangsgröße für die Kennfeldebene (31) genutzt und die Verstellung der Ventilöffnungsfläche Ares des Ventils (19) vorgenommen wird.

2. Verfahren nach Anspruch 1,
**dadurch gekennzeichnet,**
**dass** unterhalb einer definierten Amplitude als die tatsächliche Schwingung charakterisierender Parameter für die Kennfeldebene (31) nur der charakterisierende Parameter verwendet wird.

3. Verfahren nach Anspruch 2,
**dadurch gekennzeichnet,**
**dass** die Kennfeldebene (31) auf eine Kennlinie in Form eines Polynoms 2. Grades reduziert wird.

4. Verfahren nach Anspruch 2,
**dadurch gekennzeichnet,**
**dass** die Grenze der Amplitude bei max. 30 mm liegt.

5. Verfahren nach Anspruch 1,
**dadurch gekennzeichnet,**
**dass** zu dem Luftfeder-Dämpfer (1) eine Federkraftkennlinie bestimmt wird, die mit der die Dämpfkräfte repräsentierende Kennfeldebene (31) über die die Schwingungen charakterisierenden Parameter kombiniert wird, um einen Federkraftwert zu bestimmen, der durch eine Anpassung der Ventilöffnungsfläche Aᵣₑₛ in Abhängigkeit einer momentanen Zustandsgröße variabel ist.

6. Verfahren nach Anspruch 5,
**dadurch gekennzeichnet,**
**dass** als Zustandsgröße ein Bewegungsparameter eines von dem Luftfeder-Dämpfer (1) getragenen Bauteils (17) verwendet wird.

## Claims

1. Method for operating a pneumatic spring damper (1), comprising at least two operating chambers (9; 11) filled with a gaseous damping medium, which are connected via at least one flow duct, the effective cross section of the flow duct being adjustable by means of an adjustable valve (19) having a valve opening area Aᵣₑₛ,
**characterized**
- **in that** the pneumatic spring damper (1) is subjected to oscillations of known frequencies and amplitudes,
- **in that**, by means of the adjustment of the valve (19), maximum damping forces are generated which, together with at least one parameter characterizing the known oscillations, are stored in a characteristic map plane (31),
- **in that** the oscillations actually occurring on the pneumatic spring damper (1) during operation are generally judged to be harmonic oscillations,
- **in that** the value of the actually occurring oscillation, registered by means of a measurement of the characterizing parameter, is used as input variable for the characteristic map plane (31), and the adjustment of the valve opening area Aᵣₑₛ of the valve (19) is carried out.

2. Method according to Claim 1,
**characterized in that**
below a defined amplitude, only the characterizing parameter is used as parameter characterizing the actual oscillation for the characteristic map plane (31).

3. Method according to Claim 2,
**characterized in that**
the characteristic map plane (31) is reduced to a characteristic curve in the form of a polynomial of second order.

4. Method according to Claim 2,
**characterized in that**
the limit of the amplitude lies at a maximum of 30 mm.

5. Method according to Claim 1,
**characterized in that**
in relation to the pneumatic spring damper (1), a spring force characteristic curve is determined, which is combined with the characteristic map plane (31) representing the damping forces via the parameters characterizing the oscillations, in order to determine a spring force value, which is variable by adapting the valve opening area Aᵣₑₛ as a function of an instantaneous state variable.

6. Method according to Claim 5,
**characterized in that**
the state variable used is a movement parameter of a component (17) carried by the pneumatic spring damper (1).

## Revendications

1. Procédé destiné au fonctionnement d'un amortisseur à ressort pneumatique (1), comprenant au moins deux espaces de travail (9 ; 11) remplis d'un milieu d'amortissement gazeux, lesquels espaces de travail sont en liaison par le biais d'au moins un canal d'écoulement, la section transversale efficace du canal d'écoulement pouvant être ajustée au moyen d'une soupape réglable (19) de surface d'ouverture de soupape Aᵣₑₛ,
**caractérisé en ce que**
- l'amortisseur à ressort pneumatique (1) est soumis à des oscillations connues en termes de fréquences et d'amplitudes,
- des forces d'amortissement maximales sont produites par le réglage de la soupape (19), lesquelles sont consignées conjointement avec au moins un paramètre caractérisant les oscillations connues dans un plan de champ caractéristique (31),
- les oscillations effectivement produites pendant le fonctionnement sur l'amortisseur à ressort pneumatique (1) sont généralement considérées comme des oscillations harmoniques,
- la valeur détectée par une mesure du paramètre caractérisant de l'oscillation effectivement produite est utilisée comme grandeur d'entrée pour le plan de champ caractéristique (31) et le réglage de la surface d'ouverture de soupape Aᵣₑₛ de la soupape (19) est effectué.

2. Procédé selon la revendication 1,
**caractérisé en ce**
**qu'**en dessous d'une amplitude définie en tant que paramètre caractérisant l'oscillation effective pour le plan de champ caractéristique (31), l'on utilise seulement le paramètre caractérisant.

3. Procédé selon la revendication 2,
**caractérisé en ce que**
le plan de champ caractéristique (31) est réduit à une ligne caractéristique sous forme d'un polynôme de deuxième degré.

4. Procédé selon la revendication 2,
**caractérisé en ce que**
la limite de l'amplitude est de 30 mm au maximum.

5. Procédé selon la revendication 1,
**caractérisé en ce que**
l'on détermine pour l'amortisseur à ressort pneumatique (1) une ligne caractéristique de la force de ressort qui est combinée avec le plan de champ caractéristique (31) représentant les forces d'amortissement par le biais des paramètres caractérisant les oscillations, afin de déterminer une valeur de force de ressort qui est variable en fonction d'une grandeur d'état instantanée par adaptation de la surface d'ouverture de soupape Aᵣₑₛ.

6. Procédé selon la revendication 5,
**caractérisé en ce que**
l'on utilise comme grandeur d'état un paramètre de déplacement d'un composant (17) porté par l'amortisseur à ressort pneumatique (1).
